(19) Europäisches Patentamt
European Patent Office
Office européen des brevets

(11) **EP 2 588 355 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(51) Int Cl.:
***B60W 40/06*** (2012.01)

(21) Anmeldenummer: **11758087.8**

(22) Anmeldetag: **28.05.2011**

(86) Internationale Anmeldenummer:
**PCT/DE2011/001129**

(87) Internationale Veröffentlichungsnummer:
**WO 2012/006987 (19.01.2012 Gazette 2012/03)**

(54) **VERFAHREN UND VORRICHTUNG ZUR STEUERUNG ZUMINDEST EINES FAHRERASSISTENZSYSTEMS EINES FAHRZEUGES UND DAMIT AUSGESTATTETES FAHRZEUG**

METHOD AND DEVICE FOR CONTROLLING AT LEAST ONE DRIVER ASSISTANCE SYSTEM OF A VEHICLE AND VEHICLE EQUIPPED THEREWITH

PROCÉDÉ ET DISPOSITIF POUR ASSURER LA COMMANDE D'AU MOINS UN SYSTÈME D'AIDE À LA CONDUITE D'UN VÉHICULE ET VÉHICULE ÉQUIPÉ D'UN TEL SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2011 DE 102011015509**
**30.06.2010 DE 102010025722**

(43) Veröffentlichungstag der Anmeldung:
**08.05.2013 Patentblatt 2013/19**

(73) Patentinhaber: **WABCO GmbH**
**30453 Hannover (DE)**

(72) Erfinder:
• **BINDER, Hartmut**
**30657 Hannover (DE)**
• **BREUER, Karsten**
**31867 Lauenau (DE)**
• **DIECKMANN, Thomas**
**30982 Pattensen (DE)**

• **GERAMI-MANESCH, Bijan**
**31303 Burgdorf (DE)**
• **HANSLIK, Daniel**
**30916 Isernhagen (DE)**
• **HOFFMANN, Guido**
**82216 Maisach (DE)**
• **KOPPER, Heiko**
**31515 Wunstorf (DE)**
• **SANDKÜHLER, Dirk**
**30926 Seelze (DE)**

(74) Vertreter: **Lauerwald, Jörg**
**Wabco GmbH**
**Am Lindener Hafen 21**
**30453 Hannover (DE)**

(56) Entgegenhaltungen:
**EP-A2- 0 898 147       DE-A1- 4 133 359**
**DE-A1- 10 314 424      DE-A1- 19 647 430**
**DE-A1-102007 013 830   DE-A1-102008 038 037**
**DE-B1- 2 712 199**

**Beschreibung**

Die vorliegende Beschreibung bezieht sich auf Fahrassistenzsysteme für Kraftfahrzeuge. Insbesondere bezieht sich die Beschreibung auf ein Verfahren und eine Vorrichtung zur Steuerung solcher Fahrassistenzsysteme.

Moderne Kraftfahrzeuge verfügen heute in vielen Fällen über mehrere Fahrassistenzsysteme, welche den Fahrer unterstützen und beispielsweise in kritischen Situation eingreifen können, oder diese im besten Falle zu vermeiden helfen. Solche Fahrassistenzsysteme umfassen Antiblockiersysteme (ABS), Elektronische Stabilitätsregelungen (ESC, ESP, ASR), Getriebesteuerungen für automatische Getriebe, Schalthilfen, Schaltunterstützung und/oder Schleppmomentregelung (SMR, DTC), eine Fahrniveauanpassungen (ECAS) und/oder einen Offroad Modus, kann aber auch weitere Systeme umfassen.

Die DE10314424A1 beschreibt ein Warnsystem zum Zwecke einer ortsaufgelösten Feststellung von vereisten Oberflächenstellen, wobei geeignet spektrometrisch modifizierter Wärmebildkameras oder bildgebender IR Flächen-Detektor-Array Anordnungen in Kombination mit spezieller Elektronik und Bildbearbeitungssoftware zum Zwecke einer ortsaufgelösten Echtzeit Feststellung von vereisten Oberflächenstellen auf beliebigen Oberflächen verwendet werden.

Die DE102008038037A1 beschreibt ein Verfahren zur fahrdynamischen Regelung eines Fahrzeugs, wobei das Signal eines optischen Sensors erfasst wird und anhand des Signals die Beschaffenheit einer Fahrbahn ermittelt wird, wobei mindestens eine Regelfunktion automatisch an die Beschaffenheit der Fahrbahn angepasst wird.

Einige Fahrassistenzsysteme wie ABS oder ESC, ESP und ASR weisen Geschwindigkeitsmesser an jedem Rad auf, um automatisch festzustellen, mit welcher Geschwindigkeit sich jedes Rad dreht. Werden dabei Unterschiede festgestellt, kann dies auf eine rutschige Fahrbahn mit geringem Reibwert hinweisen. Diese Systeme basieren meist auf dem Prinzip, die Drehgeschwindigkeit eines Fahrzeugrades zu messen. Solche Geschwindigkeitssensoren können rein mechanisch ausgeführt sein, arbeiten heute jedoch meist mit induktiven oder Hall-Sensoren berührungsfrei. Geschwindigkeitssensoren können an jedem Rad angebracht sein, wie dies beispielsweise bei ABS-Systemen gebräuchlich ist. Diese Systeme haben jedoch den Nachteil, dass sie einen geringen Reibwert und damit eine potentiell gefährliche Situation erst dann erkennen können, wenn Raddrehzahlunterschiede festgestellt werden, das heißt, wenn das Fahrzeug bereits rutscht.

Andere Fahrassistenzsysteme wie SMR oder automatische Schaltgetriebe, haben in der Regel keinerlei Information über den Fahrbahnzustand, so dass beispielsweise beim Schalten in einer niedrigeren Gang durch das Motorbremsmoment kritische Fahrzustände hervorgerufen werden können.

Die vorliegende Erfindung hat die Aufgabe, die oben stehenden Nachteile zu überwinden.

Die Aufgabe wird gelöst durch ein Verfahren gemäß Anspruch 1 und durch eine Vorrichtung gemäß Anspruch 13 zur Steuerung zumindest eines Fahrassistenzsystems eines Fahrzeugs.

Das Verfahren umfasst ein Aussenden von Licht zumindest einer Wellenlänge auf eine Fahrbahnoberfläche unter dem Fahrzeug, ein Detektieren von an der Fahrbahnoberfläche reflektiertem Licht der zumindest einen Wellenlänge, ein Ermitteln zumindest einer Information über die Beschaffenheit der Fahrbahnoberfläche anhand des detektieren reflektierten Lichts der zumindest einen Wellenlänge, ein Übermitteln der zumindest einen Information über die Beschaffenheit der Fahrbahnoberfläche an das zumindest eine Fahrassistenzsystem und ein Verändern zumindest eines Parameters des zumindest einen Fahrassistenzsystems, so dass das zumindest eine Fahrassistenzsystem in Abhängigkeit von der Beschaffenheit der Fahrbahnoberfläche agiert.

Die Vorrichtung umfasst einen optischen Oberflächensensor zur Ermittlung zumindest einer Information über die Beschaffenheit einer Fahrbahnoberfläche, und eine Steuerung, welche mit dem optischen Oberflächensensor und dem zumindest einen Fahrassistenzsystem verbunden ist und anhand der zumindest einen Information über die Fahrbahnoberfläche zumindest einen Parameter des zumindest einen Fahrassistenzsystems verändert, so dass das zumindest ein Fahrassistenzsystem in Abhängigkeit von der Beschaffenheit der Fahrbahnoberfläche agiert.

Mit dem Verfahren und der Vorrichtung kann das Fahrassistenzsystem an die Fahrbahnsituation angepasst werden, bevor das Fahrassistenzsystem einen unsicheren Fahrbahnzustand erkennt. Das Fahrassistenzsystem kann somit schneller agieren und kritische Fahrsituationen vermeiden, bevor diese überhaupt entstehen.

Der optische Oberflächensensor kann erfassen, ob die Fahrbahnoberfläche trocken, nass, vereist oder schneebedeckt ist. Es kann auch ermittelt werden, welche Dicke ein Wasserfilm oder eine Eisschicht auf der Fahrbahnoberfläche hat. Der optische Oberflächensensor kann auch die Rauhigkeit der Fahrbahnoberfläche erfassen, um festzustellen ob die Fahrbahnoberfläche Asphalt, Beton oder eine rauerer Untergrund ist, so dass auf eine Offroad Situation geschlossen werden kann. Diese Informationen über die Beschaffenheit der Fahrbahnoberfläche können dem Fahrassistenzsystem zur Verfügung gestellt werden.

Das Fahrassistenzsystem kann ein Antiblockiersystem (ABS) umfassen. Die Information über die Beschaffenheit der Fahrbahnoberfläche kann dazu verwendet werden einen ersten Regelzyklus des Antiblockiersystems in Abhängigkeit von der Beschaffenheit der Fahrbahnoberfläche einzustellen. So kann beispielsweise eine geringeres Einbremsen in dem ersten Regelzyklus vorgesehen werden, wenn eine nasse Fahrbahn ermittelt wurde, um ein zu starkes Überbremsen des ABS zu verhindern. Das Einbremsen kann weiter verringert werden, wenn sich das Fahrzeug auf einen rutschigen Untergrund wie Eis oder Schnee befindet. Der übliche erste Regelzyklus mit starkem Einbremsen kann somit durch eine Voreinstellung ersetzt werden, so dass das Anpassen des Bremsdrucks schneller erfolgt.

Das Fahrassistenzsystem kann auch eine Antischlupfregelung (ASR) umfassen, bei der ebenfalls in Abhängigkeit von der Beschaffenheit der Fahrbahnoberfläche zumindest der erste Regelzyklus angepasst wird.

Das Fahrassistenzsystem kann eine Stabilitätsregelung (ESP, ESR) umfassen. Ein Eingreifen, z.B. ein Zeitpunkt des Eingreifens oder ein anderer Parameter des Eingreifens der Stabilitätsregelung kann an die ermittelte Beschaffenheit der Fahrbahn angepasst werden.

Beispielsweise kann vorgesehen sein einem Lenkradeinschlag, die Fahrzeuggeschwindigkeit und ggf. weitere Parameter mit der ermittelten Beschaffenheit der Fahrbahnoberfläche abzugleichen und zu ermitteln, ob die so vorausberechneten Querkräfte bei der ermittelten Beschaffenheit der Fahrbahnoberfläche ein Eingreifen der Stabilitätsregelung erforderlich machen. Damit kann ein der aktuellen Fahrbahnbeschaffenheit angepasstes frühes Eingreifen einer Stabilitätsregelung erreicht werden.

Das Fahrassistenzsystem kann eine Getriebesteuerung für ein automatisches Getriebe umfassen. Ein automatisches Getriebe kann jede Art automatisierter Gangwechsel umfassen.

Es kann beispielsweise vorgesehen sein, die Schaltcharakteristik an die ermittelte Beschaffenheit der Fahrbahnoberfläche anzupassen. Beispielsweise kann vorgesehen sein, bei winterlichen Fahrbahnbeschaffenheiten mit geringem Reibwert, wenn beispielsweise Schnee oder Eis auf der Fahrbahn ermittelt wurde, ein Anfahren in einem höheren Gang, z.B. im 2. oder 3. Gang vorzusehen um ein Durchdrehen der Antriebsräder zu verhindern. Auch kann ein früheres Hochschalten bei Fahrbahnbeschaffenheiten mit geringem Reibwert vorgesehen sein.

Es kann insbesondere bei Fahrzeugen mit einer Schleppmomentregelung (SMR) auch vorgesehen sein, ein frühzeitiges Schalten in einen niedrigeren Gang zu verhindern, wenn sich das Fahrzeug auf einer Fahrbahnoberfläche mit geringem Reibwert befindet. Damit kann vermieden werden, dass durch das Eingreifen der Motorbremse das Fahrzeug ins Rutschen oder einen anderen kritischen Zustand gebracht wird. Unter Einbeziehung der ermittelten Beschaffenheit der Fahrbahnoberfläche und des daraus ermittelten Reibwerts und ggf. weitere Fahrzeugparameter, wie Fahrgeschwindigkeit, Reifenzustand und ähnliches kann ein maximales übertragbares Schleppmoment ermittelt werden. Kann beim Runterschalten das zu erwartende Schleppmoment nicht übertragen werden, kann Vorgesehen sein den Schaltzeitpunkt zu verschieben oder mittels einer SMR oder DTC-Funktion, beispielsweise durch kurzzeitiges Gasgeben entgegen gewirkt werden.

Das Fahrassistenzsystem kann auch einen Offroad Modus umfassen. Es kann vorgesehen sein das Fahrzeug in einen Offroad Modus zuschalten, wenn die Information über die Beschaffenheit der Fahrbahnoberfläche umfasst, dass sich das Fahrzeug nicht auf einer befestigten Strasse mit einer geringen Rauhigkeit, wie Asphalt oder Beton befindet. Es kann vorgesehen sein, in so einem Fall automatisch den Offroad Modus zu aktivieren. Der Offroad Modus kann beispielsweise das Zuschalten eines Allradantriebs oder eine anderen Traktionshilfe umfassen. Der Offroad Modus kann auch das Einstellen einer Niveauanpassung umfassen um beispielsweise die Bodenfreiheit des Fahrzeugs zu erhöhen.

Erkennt der optische Oberflächensensor, dass sich das Fahrzeug wieder auf einer befestigten Fahrbahn befindet, kann der Offroad Modus entsprechend automatisch abgeschaltet werden.

Insbesondere bei ABS und Stabilitätsregelungen, aber auch bei anderen Fahrassistenzsystemen kann je ein optischer Oberflächensensor vor jedem Rad des Fahrzeugs vorgesehen sein, so dass die Beschaffenheit der Fahrbahnoberfläche für jedes Rad einzeln erfolgen kann und das Eingreifen des Fahrassistenzsystems entsprechend eingestellt wird.

Der optische Oberflächensensor kann über eine Lichtquelleneinheit zum Aussenden von Licht von zumindest einer Wellenlänge auf den Untergrund und zumindest einen Detektor umfassen, um von dem Untergrund reflektiertes Licht zu detektieren.

Der Oberflächensensor kann neben dem ersten Detektor einen zweiten Detektor umfassen, wobei der erste Detektor zum Erfassen von diffus reflektiertem Licht und der zweite Detektor zum Erfassen von spiegelnd reflektiertem Licht geeignet sind. Es können zumindest zwei Polarisatoren vorgesehen sein, wobei ein erster Polarisator mit einer ersten Polarisationseinrichtung dem ersten Detektor zugeordnet ist. Der Lichtquelleneinheit kann ein Lichtquellenpolarisator und/oder dem zweiten Detektor kann ein zweiter Polarisator zugeordnet sein, dessen Polarisierungsrichtung(en) im Wesentlichen senkrecht zu der ersten Polarisierungsrichtung des ersten Polarisators ausgerichtet ist/sind. Sind zumindest zwei Polarisatoren bzw. Polarisationsfilter vorgesehen, ist der erste Polarisator an dem ersten Detektor angeordnet, welcher nur Lichtwellen in der ersten Polarisationsrichtung zu dem ersten Detektor durchlässt. Ist ein Lichtquellenpolarisator an der Lichtquelleneinheit vorgesehen, ist dessen Polarisationsrichtung im Wesentlichen senkrecht zu der ersten Polarisationsrichtung des ersten Polarisators angeordnet, und das von dem Sensor ausgesandte Licht ist in einer Richtung im Wesentlichen senkrecht zu der ersten Polarisationsrichtung polarisiert, so dass an dem ersten Detektor polarisiertes, spiegelnd reflektiertes Licht herausgefiltert und nur diffus reflektiertes Licht detektiert wird. Ein ähnlicher Effekt kann erreicht werden, wenn ein zweiter Polarisator vor dem zweiten Detektor angeordnet ist, dessen Polarisationsrichtung im Wesentlichen senkrecht zu der ersten Polarisationsrichtung ausgerichtet ist. Der zweite Polarisator kann alternativ oder zusätzlich zu dem Lichtquellenpolarisator verwendet werden. Es kann auch vorgesehen sein, in der Lichtquelleneinheit bereits polarisiertes Licht zu erzeugen

Die Lichtquelleneinheit kann zum Aussenden von Licht von zumindest zwei voneinander verschiedenen Wellenlängen oder zum Aussenden von mehreren Wellenlängen auf den Untergrund bzw. die Fahrbahnoberfläche ausgelegt sein. Dazu kann die Lichtquelleneinheit beispielsweise mehrere Lichtquellen umfassen. Die Verwendung mindestens zweier, vorzugsweise drei von einander verschiedener Wellenlängen erlaubt es, den Sensor in spektraler Weise zu betreiben. Durch die Verwendung von Wellenlängen, welche z.B. von Eis oder Wasser besonders gut absorbiert werden, können Eis bzw. Wasser auf der Fahrbahn bzw. Fahrbahnoberfläche erkannt werden, wenn das reflektierte Licht der vom Wasser bzw. Eis absorbierten Wellenlänge mit dem einer Referenzwellenlänge verglichen wird. Es ist somit möglich, die Prinzipien der Spektralanalyse und der Diffus- und Spiegelndreflexion in nur einem Gerät, bzw. einem einzigen Gehäuse auszuführen. Die zumindest eine Lichtquelleneinheit, der erste Detektor und gegebenenfalls der zweite Detektor können dazu in einem gemeinsamen einzigen und/oder einstückigen Gehäuse beispielsweise unmittelbar nebeneinander angeordnet sein.

Es kann Licht in zumindest drei voneinander verschiedenen Wellenlängen im Infrarotbereich verwendet werden. Die Lichtquelleneinheit kann dazu mehrere Lichtquellen umfassen. Z.B. kann die Lichtquelleneinheit dazu ausgelegt sein, Infrarotlicht der Wellenlängen 1300 nm, 1460 nm und 1550 nm auszusenden. Während Licht der Wellenlänge 1460 nm besonders gut von Wasser absorbiert wird, wird Licht der Wellenlänge 1550 nm gut von Eis absorbiert. Licht im Bereich von ungefähr 1300 nm kann dann als Referenzwellenlänge verwendet werden. Es können jedoch auch andere Wellenlängen verwendet werden. Insbesondere für die Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Die Lichtquelleneinheit kann dazu ausgelegt sein, Licht genau drei verschiedener Wellenlängen auszusenden. Dazu kann die Lichtquelleneinheit drei Lichtquellen, eine Lichtquelle für jede Wellenlänge aufweisen.

Es werden nur die drei Wellenlängen verwendet, um sowohl spektral als auch spiegelnd/diffus reflektiertes Licht zu erfassen, um sowohl die Fahrbahnbeschaffenheit als auch die Art der Fahrbahn zu ermitteln bzw. zu erkennen. Jede der Lichtquellen kann einzeln ansteuerbar und unabhängig von den anderen an- und abschaltbar sein bzw. in der Intensität regulierbar sein.

Darüber hinaus können auch mehr als die oben genannten zwei oder drei voneinander verschiedenen Wellenlängen verwendet werden. Beispielsweise kann die Wellenlänge 625 nm auch zur Messung des diffus und spiegelnd reflektierten Lichts verwendet werden.

Es kann weiterhin vorgesehen sein, das ausgesendete Licht in der Intensität bzw. Amplitude zu modulieren. Das Modulieren der Intensität oder Amplitude kann durch An- und Ausschalten aller oder einzelner Lichtquellen der Lichtquelleneinheit erfolgen. Das Modulieren der Intensität bzw. das An- und Abschalten kann für jede Wellenlänge der Lichtquelleneinheit oder für jede Lichtquelle der Lichtquelleneinheit separat erfolgen. Beispielsweise kann das Modulieren der Amplitude oder Intensität bzw. das An- und Abschalten für jede Wellenlängen mit der gleichen Frequenz, jedoch phasenverschoben und/oder mit unterschiedlichen Frequenzen erfolgen. Dadurch kann beispielsweise erreicht werden, dass das Licht unterschiedlicher Wellenlängen zeitlich versetzt oder sequentiell ausgesandt wird. Z.B. kann vorgesehen sein, Licht einer ersten Wellenlänge für ein bestimmtes Zeitintervall auszusenden, dann das Licht der ersten Wellenlänge abzuschalten und eine zweite Wellenlänge einzuschalten usw.. In den Detektoren wird dann jeweils Licht von nur einer Wellelänge detektiert. Dadurch kann eine spektrale Analyse oder Aufspaltung des einfallenden Lichts an den Detektoren vermieden werden. Es sind auch Mischformen verschiedener Modulationstechniken anwendbar, insbesondere frequenz- und amplitudenmodulierte optische Signalzüge mit oder ohne Unterbrechungen.

Die vorliegende Erfindung erlaubt es daher auch, einfache Detektoren als ersten oder zweiten Detektor zu verwenden. Beispielsweise können Photodioden verwendet werden. Der erste Detektor und der zweite Detektor können jeweils eine oder mehrere Photodioden umfassen. Zumindest der erste Detektor kann dazu ausgelegt sein, Licht aller von der Lichtquelleneinheit ausgesendeten Wellenlängen zu erfassen. Der Detektor kann auch alternativ oder ergänzend einen optoelektronischen Chip (z.B. CCD) oder eine andere optische Aufnahmeeinrichtung umfassen.

Der erste und der zweite Detektor können zur Erfassung bzw. zur Ermittlung von spiegelnd reflektiertem und diffus reflektiertem Licht verwendet werden. Zudem kann zumindest einer aus dem ersten und dem zweiten Detektor auch für die spektrale Ermittlung verwendet werden. Zumindest dieser Detektor ist dann dazu ausgelegt, Licht mehrerer Wellenlängen zu detektieren. In diesem Beispiel verfügt der Sensor über genau den ersten Detektor und den zweiten Detektor und es sind keine weiteren Detektoren vorgesehen.

Der Oberflächensensor kann ferner eine Auswerteinrichtung umfassen, welche eine Information über die Beschaffenheit der Fahrbahnoberfläche bzw. des Untergrunds ausgibt.

Im Folgenden werden weitere Einzelheiten und Beispiele der Erfindung lediglich beispielhaft und nicht einschränkend mit Bezug auf die beiliegenden Figuren angeben, welche zeigen:

Figur 1a und 1b ein Beispiel eines Fahrzeugs mit einer erfindungsgemäßen Vorrichtung in einer Draufsicht und in einer Seitenansicht;
Figur 2 ein erstes Beispiel einer Vorrichtung gemäß der vorliegenden Beschreibung;
Figur 3 ein zweites Beispiel einer Vorrichtung gemäße der vorliegenden Beschreibung;
Figur 4 schematisch ein erfindungsgemäßes Verfahren; und
Figur 5 ein beispielhafte Auswertung von Lichtintensitäten.

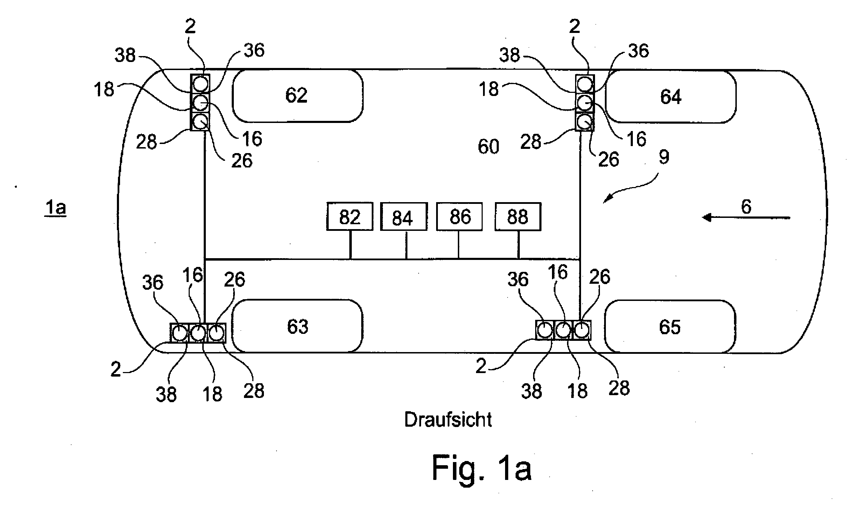

Die Figur 1a zeigt ein Fahrzeug 60, welches mit Beispielen der erfindungsgemäßen Vorrichtung 9 ausgestattet ist.

Das Fahrzeug 60 umfasst jeweils eine Oberflächensensor 2 vor jedem Rad, insbesondere einen Oberflächensensor 2 vor dem rechten Vorderrad 62, einen Oberflächensensor 2 vor dem linken Vorderrad 63, Oberflächensensor 2 vor dem rechten Hinterrad 64 und einen Oberflächensensor 2 vor dem linken Hinterrad 65, wobei sich die Bezeichnungen vor, hinter, rechts und links auf die normale Fahrtrichtung 6 des Fahrzeugs 60 beziehen. Der Oberflächensensor 2 ist jeweils vor dem Rad in dessen Spur angeordnet. Der Sensor 2 ist so angeordnet, dass eine Lichtemitteröffnung 18 mit einer Emitteroptik 16, einer erste Detektoröffnung 28 mit einer ersten Sammeloptik 26 und eine zweite Detektoröffnung 38 mit einer zweiten Sammeloptik 36 von der Fahrbahn 1 aus sichtbar sind und vor dem rechten Vorderrad 62 und dem rechten Hinterrad 64 im Wesentlichen in einer Reihe quer zur Fahrtrichtung 6 angeordnet dargestellt. Vor dem in Fahrtrichtung 6 linken Vorderrad 63 und dem linken Hinterrad 65 ist ebenfalls ein Sensor 2 angeordnet, wobei der Sensor 2 hier entlang der mit einem Pfeil 6 gekennzeichneten Fahrtrichtung 6 des Fahrzeugs 60 angeordnet ist. Die Ausrichtung des Sensors ist lediglich beispielhaft und es können alle Sensoren 2 gleich ausgerichtet sein.

Das dargestellt Fahrzeug 60 verfügt über vier Räder. Es können jedoch auf mehrere Räder vorgesehen sein. Das Fahrzeug 60 kann ein Personenkraftwagen, ein Nutzfahrzeug oder jede andere Art von Fahrzeug sein.

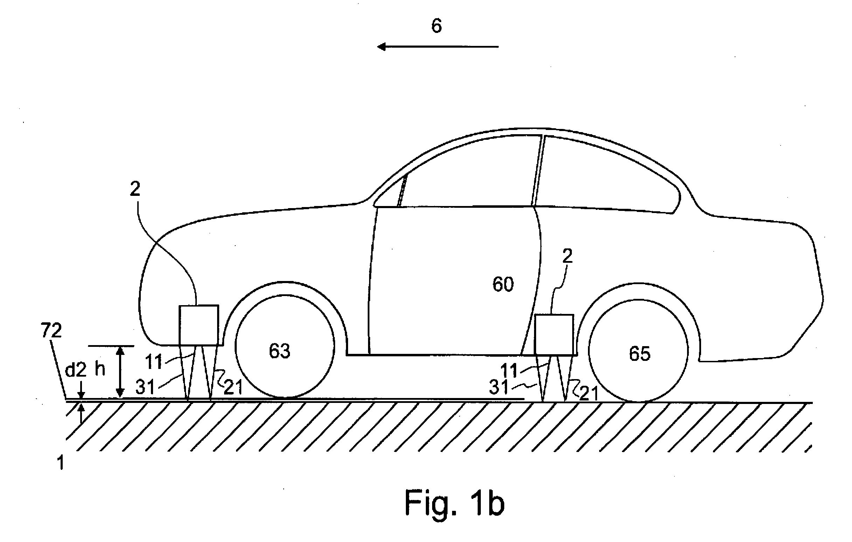

Jeder der Sensoren 2 ist im in der Figur 1 dargestellten Beispiel mit einer Steuerung der Fahrassistenzsysteme verbunden, welche die Steuerung eines Antiblockiersystems 82, die Steuerung einer Stabilitätsregelung 84, eine Getriebesteuerung 86 und eine Offroad Modussteuerung 88 umfassen. Neben den dargestellten Fahrassistenzsystemen können weitere Fahrassistenzsystem mit den Sensoren 2 verbunden sein. Auch kann vorgesehen sein nur eines oder eine Auswahl der Fahrassistenzsystem mit den Sensoren 2 zu verbinden. Die Fahrassistenzsysteme 82, 84, 86, 88 können bereits bekannte und in dem Fahrzeug vorgesehene Systeme sein, welche entsprechend angepasst werden oder speziell für die Verbindung mit den Sensoren 2 vorgesehen sein.

Die Figur 1b zeigt das Fahrzeug 60 der Figur 1a in einer Seitenansicht. Das Fahrzeug befindet sich mit dem linken Vorderrad 63 auf einer Einschicht 72 der Dicke d2, während sich das linke Hinterrad 65 auf trockener Fahrbahnoberfläche 1a befindet.

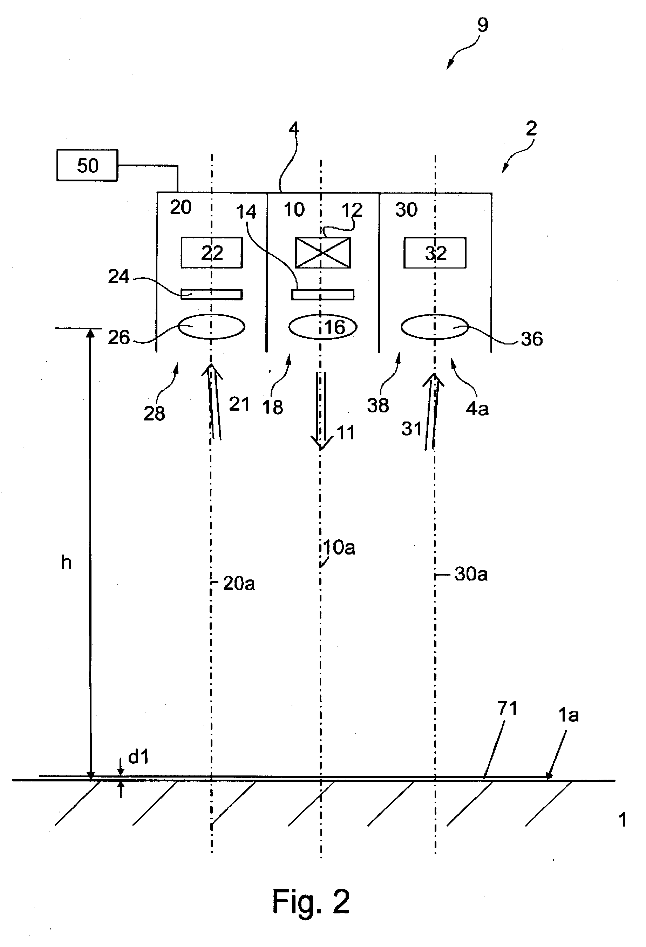

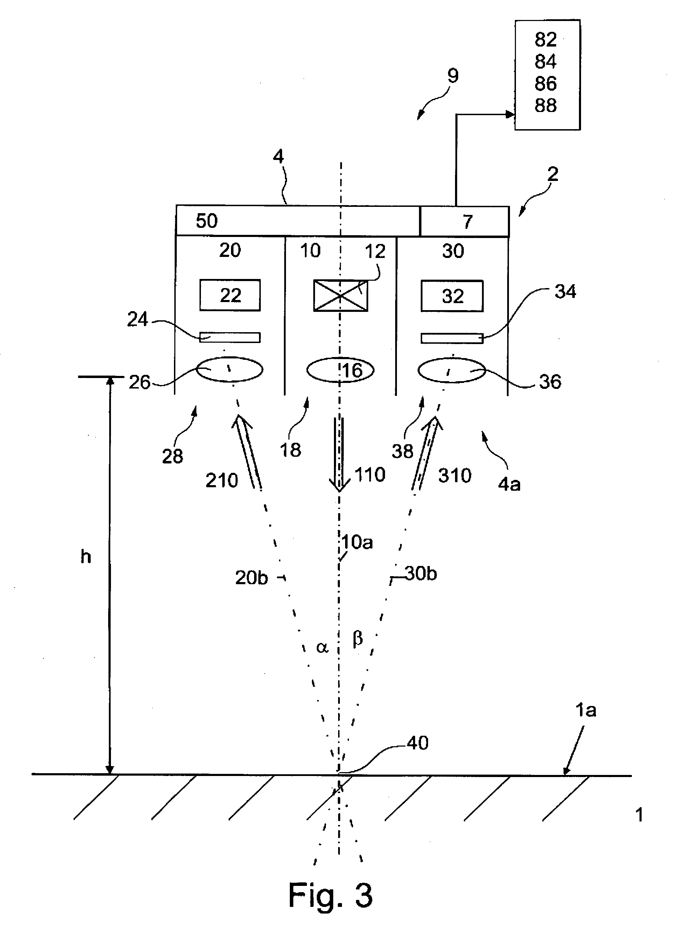

Ein Beispiel eines der Sensoren 2 ist in den Figuren 2 und 3 im Detail dargestellt.

Der Oberflächensensor 2 hierin auch als Sensors 2 zur Erkennung der Beschaffenheit, insbesondere eines Zustands und der Art der Oberfläche einer Fahrbahn 1 bzw. Fahrbahnoberfläche 1 a bezeichnet, ist dazu ausgelegt, an einem Kraftfahrzeug 60 angebracht zu werden.

Der Sensor 2 umfasst in einem Gehäuse 4 drei Einrichtungen, eine Lichtemittereinrichtung 10, eine erste Detektoreinrichtung 20 und eine zweite Detektoreinrichtung 30. Der Lichtemittereinrichtung 10 weist ein Lichtemitterfenster oder eine Lichtemitteröffnung 18 in dem Gehäuse 4 auf, die erste Detektoreinrichtung 20 weist ein erstes Detektorfenster oder eine erste Detektoröffnung 28 in dem Gehäuse 4 auf und die zweite Detektoreinrichtung 30 weist ein zweites Detektorfenster oder eine zweite Detektoröffnung 38 in dem Gehäuse 4 auf. Die Lichtemitteröffnung 18, die erste Detektoröffnung 28 und die zweite Detektoröffnung 38 sind an der gleichen Seite 4a des Gehäuses 4 angeordnet und zu der Fahrbahn 1 hin ausgerichtet, wenn der Sensor 2 betriebsbereit an einem Fahrzeug montiert ist. Der Sensor 2 ist so ausgerichtet, dass der ausgesendete Lichtstrahl 11 ungefähr senkrecht auf die Fahrbahn 1 bzw. Fahrbahnoberfläche 1 a fällt, d.h. die optische Achse des Lichtemitterabschnitts 10a, bzw. die Lichtemitterachse 11 a steht im Wesentlichen senkrecht zu der Fahrbahn 1 bzw. Fahrbahnoberfläche 1a . Im dargestellten Beispiel befindet sich ein Wasserfilm 71 der Dicke d1 auf der Fahrbahnoberfläche 1 a. Die Fahrbahnoberfläche kann jedoch auch schneebedeckt, vereist oder trocken sein oder eine andere Beschaffenheit haben.

In dem in den Figuren 2 und 3 dargestellten Beispielen sind die Lichtemittereinrichtung 10, die erste Detektoreinrichtung 20 und die zweite Detektoreinrichtung 30 in einer Reihe angeordnet und die Lichtemittereinrichtung 10 ist zwischen der ersten Detektoreinrichtung 20 und der zweiten Detektoreinrichtung 30 angeordnet.

Die Lichtemittereinrichtung 10, die erste Detektoreinrichtung 20 und die zweite Detektoreinrichtung 30 können jedoch auch getrennt voneinander angeordnet sein und müssen nicht in einem Gehäuse zusammengefasst sein.

In der Lichtemittereinrichtung 10 ist eine Lichtquelleneinheit 12 angeordnet, welche zur Aussendung von Licht mehrerer unterschiedlicher Wellenlängen ausgelegt ist. Die Lichtquelleneinheit 12 kann dazu eine oder mehrere Leuchtdioden (LEDs), Laserdioden, eine andere geeignete Lichtquelle oder eine Kombination daraus umfassen und ist dazu geeignet, Licht mehrerer voneinander verschiedener Wellenlängen auszusenden. Beispielsweise kann die Lichtquelleneinheit 12 Licht zumindest mit den Wellenlängen 1300 nm, 1460 nm und 1550 nm aussenden. Die vorgesehenen Wellenlängen können jedoch dem jeweiligen Einsatzzweck angepasst werden.

Der Lichtquelleneinheit 12 ist im in der Figur 2 dargestellten Beispiel in Richtung des ausgesandten Lichtstrahls 11 ein Lichtquellenpolarisator oder Lichtquellenpolarisationsfilter 14 nachgeschaltet, welcher das von der Lichtquelleneinheit 12 ausgesandte Licht in eine vorbestimmte Richtung polarisiert.

Ferner ist eine Emitteroptik 16 vorgesehen, um das ausgesendete Licht entlang eines emittierten Lichtstrahls 11 auf einen bestimmten Bereich auf dem Untergrund oder der Fahrbahn 1 bzw. der Fahrbahnoberfläche 1 a unter dem Fahrzeug 60 auszurichten bzw. zu fokussieren. Die optische Achse der Emitteroptik 16 kann die optische Achse 10a des Lichtemitterabschnitts 10 definieren. Die Emitteroptik 16 kann aus einer Emitterlinse bestehen oder mehrere Linsen und/oder andere optische Element umfassen.

Der erste Detektorabschnitt 20 umfasst einen ersten Detektor 22, beispielsweise eine oder mehrere Photodioden, dazu ausgelegt, Licht aller von der Lichtquelleneinheit 10 ausgesandten Wellenlängen zu detektieren. Der erste Detektor 22 kann dazu auch mehrere nebeneinander angeordnete Photodioden oder einen oder mehrere optoelektronische Einheiten (z.B. CCD, CMOS) umfassen.

An dem ersten Detektor 22 ist eine erste Sammeloptik 26 und ein erster Polarisator oder erster Polarisationsfilter 24 angeordnet. Die erste Sammeloptik 26 kann aus einer einzelnen ersten Sammellinse bestehen oder mehrere Linsen und/oder weitere optische Elemente umfassen. Die Polarisierungsrichtung des ersten Polarisationsfilters 24 ist senkrecht zu der des Lichtquellenpolarisationsfilters 14 und damit im Wesentlichen senkrecht zu der vorbestimmten Polarisierungsrichtung. Spiegelnd reflektiertes, in der vorbestimmten Richtung polarisiertes Licht wird damit herausgefiltert und lediglich diffus reflektiertes Licht gelangt zu dem ersten Detektor 22. Der erste Detektor 22 dient somit als "Streuungsdetektor".

Eine erste Achse 20a kann im Wesentlichen der optischen Achse der ersten Sammeloptik 26 und/oder des ersten Detektorabschnitts 20 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

In dem zweiten Detektorabschnitt 30, welcher auf der dem ersten Detektorabschnitt 20 gegenüberliegenden Seite des Lichtemitterabschnitts 10 in dem Gehäuse 4 des Sensors 2 angeordnet ist, ist ein zweiter Detektor 32 angeordnet.

Der zweite Detektor 32 kann ebenfalls eine Photodiode umfassen, welche dazu ausgelegt ist, zumindest Licht einer von der Lichtquelleneinheit 12 ausgesandten Wellenlängen zu detektieren. Der zweite Detektor 32 kann jedoch ebenfalls mehrere nebeneinander angeordnete Photodioden umfassen und dazu ausgelegt sein, Licht mehrerer verschiedener Wellenlängen oder Wellenlängenbereiche zu detektieren.

Dem zweiten Detektor 32 ist eine zweite Sammeloptik 36 zugeordnet, um das reflektierte Licht auf den zweiten Detektor 32 zu fokussieren und in diesem zu detektieren. Die zweite Sammeloptik 36 kann aus einer einzelnen zweiten Sammellinse bestehen oder mehrere Linsen und/oder weitere optische Elemente umfassen. Im Gegensatz zu dem ersten Detektor 22, weist der zweite Detektor 32 im in der Figur 1 dargestellten Beispiel keinen Polarisator oder Polarisationsfilter auf. Da bereits das emittierte Licht polarisiert ist, ist dies auch nicht notwendig. Von dem zweiten Detektor wird somit diffus reflektiertes und spiegelnd reflektiertes Licht detektiert, welches entlang des zweiten Detektorstrahlengangs 31 reflektiert wird. Jedoch kann auch der zweite Detektor 32 einen Polarisationsfilter (nicht dargestellt) aufweisen, dessen Polarisationsrichtung parallel zu derjenigen des Emitterpolarisators 16 ist, um lediglich spiegelnd reflektiertes Licht in der zweiten Photodiode 36 zu detektieren.

Eine zweite Achse 30a kann im Wesentlichen der optischen Achse der zweiten Sammeloptik 36 und oder des zweiten Detektorabschnitts 30 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

Der beschriebene Sensor kann im sichtbaren Lichtbereich, beispielsweise bei einer Wellenlänge von ungefähr 625 nm betrieben werden, um spiegelnd reflektiertes Licht und diffus reflektiertes Licht zu messen. Aus dem Verhältnis von dem im ersten Detektor 22 gemessenen diffus reflektierten Licht zu dem im zweiten Detektor 32 zusätzlich gemessenen spiegelnd reflektierten Licht kann auf die Fahrbahnhelligkeit und Fahrbahnrauhigkeit geschlossen werden und damit bestimmt werden, ob sich das Fahrzeug beispielsweise auf einer Asphalt- oder Betonfahrbahn befindet.

Der beschriebene Sensor kann auch im Infrarotbereich bei verschiedenen Wellenlängen verwendet werden. Hierzu kann der erste Detektor 22 und/oder der zweite Detektor 32 verwendet werden. Beispielsweise wird Infrarotlicht der Wellenlänge 1460 nm besonders gut von Wasser absorbiert, so dass Licht dieser Wellenlänge bei nasser Fahrbahn nur in geringem Maße zu dem ersten Detektor 22 bzw. dem zweiten Detektor 32 zurückreflektiert wird. Bei trockener Fahrbahn wird diese Wellenlänge dahingegen normal reflektiert. Infrarotlicht der Wellenlänge 1550 nm wird dahingegen gut von Eis absorbiert. Durch Vergleich der Reflexion dieser beiden Wellenlängen und Berücksichtigung einer Referenzwellenlänge kann auf Eis oder Wasser auf der Fahrbahn geschlossen werden. Die Referenzwellenlänge, welche weder von Eis noch von Wasser nennenswert absorbiert wird, z.B. 1300 nm, dient als Bezugsgröße zur Bewertung des Absorptionsgrades der beiden anderen Wellenlängen. Dann können die gemessenen Intensitätsverhältnisse bei den Wellenlängen 1550 nm/1300 nm mit dem Verhältnis 1460 nm/1300 nm in bekannter Weise in Relation gesetzt werden, um Informationen über Wasser und Eis auf der Fahrbahn oder eine trockene Fahrbahn zu erlangen.

Die verschiedenen Wellenlängen können parallel, insbesondere aber sequentiell zeitlich versetzt, ausgesandt werden. Somit wird jeweils nur Licht einer Wellenlänge zu einem Zeitpunkt ausgesandt und dementsprechend detektiert. Dies erlaubt es, auf eine aufwändige spektrale Analyse oder Strahlaufteilung zu verzichten.

Der Sensor 2 verfügt ferner über eine Auswerteinrichtung 50, mit welcher die von dem ersten Detektor 22 und dem zweiten Detektor 32 erfassten bzw. ermittelten Daten verarbeitet werden. Die Auswerteinrichtung 50 kann außerhalb des Gehäuses 4 angeordnet sein und sich beispielsweise an einem anderen Ort in dem Fahrzeug 60 befinden. Die Auswerteinrichtung 50 kann mit dem ersten Detektor 22 und dem zweiten Detektor 32 über ein Kabel oder eine drahtlose Verbindung verbunden sein. Die Auswerteinrichtung kann auch eine Steuerung für die Lichtquelleneinheit 21 umfassen oder mit einer Steuerung verbunden sein. Die Auswerteinheit 50 und/oder die Steuerung können jedoch auch an oder in dem Gehäuse 4 angeordnet sein bzw. in diese integriert sein, wie mit Bezug auf die Figur 2 dargestellt.

Mit dem beschriebenen Sensor 2 können mit einem kompakten und kostengünstigen Aufbau sowohl spektrale Reflexion, als auch spiegelnde und diffuse Reflexion in kurzer zeitlicher Abfolge gemessen und auf dieser Basis auf Fahrbahnart und -zustand geschlossen werden. Dadurch entsteht eine bessere und genauere Information über die Art und den tatsächlichen Zustand der Fahrbahn 1 bzw. Fahrbahnoberfläche 1a unter dem Fahrzeug 60. Für die Messung ist nur der eine Sensor 2 erforderlich.

Soll nur spektrale Reflexion gemessen werden, da beispielsweise die Messgenauigkeit dafür ausreichend ist, kann gegebenenfalls der zweite Detektorabschnitt 30 weggelassen werden.

Die Figur 3 zeigt ein weiteres Beispiel für eine Vorrichtung 9. Die mit Bezug auf die Figur 3 dargestellten und beschriebenen Merkmale können je nach Anwendung mit den mit Bezug auf die Figur 2 dargestellten und beschriebenen Merkmalen kombiniert oder ausgetauscht werden.

Der in der Figur 3 dargestellte Sensor 2 entspricht dem mit Bezug auf die Figur 2 beschriebenen Sensor mit dem Unterschied, dass kein Lichtquellenpolarisator vorgesehen ist. Der ausgesandte Lichtstrahl 110 ist in diesem Fall nicht polarisiert. Um dennoch spiegelnd reflektiertes Licht herausfiltern zu können, ist ein zweiter Polarisationsfilter 34 im Strahlengang vor dem zweiten Detektor 32 angeordnet. Die Polarisationsrichtung des zweiten Polarisationsfilters 34 ist im Wesentlichen senkrecht zu der Polarisationsrichtung des ersten Polarisationsfilters 24. Alle übrigen Elemente des Sensors 2 können denen des mit Bezug auf die Figur 1 dargestellten Sensors entsprechen.

Im in der Figur 3 dargestellten Beispiel befindet sich weder ein Wasserfilm 71 noch eine Eisschicht 72 auf der Fahrbahnoberfläche 1a.

Im in der Figur 3 dargestellten Beispiel ist die erste Achse 20b, welche der optischen Achse der ersten Sammeloptik 26 und/oder des gesamten ersten Detektorabschnitts 20 entsprechen kann, in einem Winkel $\alpha$ zur Emitterachse 10a ausgerichtet, wobei der Winkel $\alpha$ maximal ungefähr 10° beträgt. Entsprechend kann die zweite Achse 30b, welche der optischen Achse der zweiten Sammeloptik 36 und/oder des gesamten zweiten Detektorabschnitts 30 entsprechen kann, in einem Winkel $\beta$ zur Emitterachse 10a ausgerichtet sein, wobei der Winkel $\beta$ ebenfalls maximal ungefähr 10° beträgt. Der Schnittpunkt 40 der Emitterachse 10a mit der ersten Achse 20b und/oder der zweiten Achse 30b kann auf der Fahrbahnoberfläche 1 a liegen oder in einem Abstand von bis zu 50cm von der Fahrbahnoberfläche 1a liegen.

Es besteht ferner die Möglichkeit, sowohl einen Lichtquellenpolarisator oder Lichtquellenpolarisationsfilter 14 an der Lichtquelleneinheit 12 vorzusehen, wie mit Bezug auf die Figur 1 beschrieben, als auch einen zweiten Polarisator oder zweiten Polarisationsfilter 34 an dem zweiten Detektor 32. Typischerweise sind dann die Polarisationsrichtungen des Lichtquellenpolarisationsfilters 14 und des zweiten Polarisationsfilters 34 parallel zueinander ausgerichtet. Die Polarisationsrichtungen des Lichtquellenpolarisationsfilters 14 und des zweiten Polarisationsfilters 34 des zweiten Detektors 32 sind jedoch im Wesentlichen senkrecht zu der Polarisationsrichtung des ersten Polarisators oder ersten Polarisationsfilters 24 angeordnet.

In der Figur 3 ist ferner die Auswerteinrichtung 50 innerhalb des Gehäuses 4 des Sensors 2 angeordnet bzw. in das Gehäuse 2 integriert dargestellt. Es versteht sich, dass die Auswerteinheit auch, wie in Figur 1 dargestellt, außerhalb des Sensors 2 vorgesehen sein kann.

Der Sensor 2 und insbesondere die Emitteroptik 16 und die erste Sammeloptik 26 beziehungsweise gegebenenfalls auch die zweite Sammeloptik 36 können dazu ausgelegt sein in einer bestimmten Höhe oder einem bestimmten Höhenbereich über der Fahrbahnoberfläche 1 a angeordnet zu werden. Beispielsweise kann der Sensor 2 dazu ausgelegt sein in einer Höhe h beziehungsweise einem Abstand von ungefähr 10 cm bis ungefähr 1 m von der Fahrbahnoberfläche 1a angeordnet zu werden, wobei der Abstand einen jeweiligen Einsatzzweck angepasst werden kann. Für die Verwendung des Sensors 2 in einem Personenkraftwagen kann die Höhe h im Bereich von ungefähr 10 cm bis 40 cm liegen. Bei einer Verwendung des Sensors 2 in einem Nutzfahrzeug, einem Omibus oder einem Geländefahrzeug kann die Höhe h ungefähr 30 cm bis ungefähr 100 cm betragen, insbesondere in einem Bereich von 50 cm bis 80 cm.

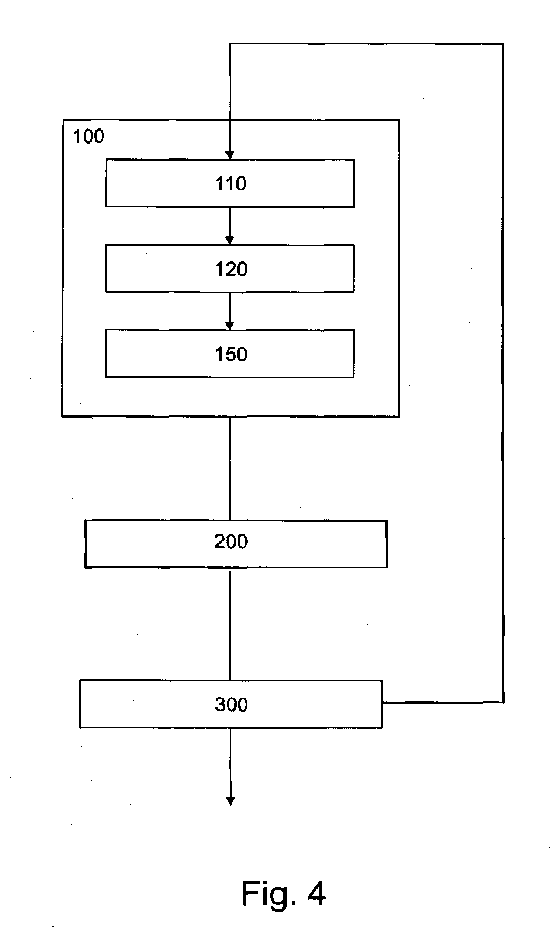

Die Figur 4 zeigt beispielhaft ein Verfahren zur Steuerung eines Fahrassistenzsystems. Das Verfahren umfasst den Schritt des Erfassens einer Information 100 über eine Fahrbahnbeschaffenheit beziehungsweise die Beschaffenheit einer Fahrbahnoberfläche 1a. Das Erfassen der Information 100 über die Beschaffenheit der Fahrbahnoberfläche 1 a umfasst das Aussenden von Licht 110 von zumindest einer Wellenlänge, bevorzugt von mindestens drei voneinander verschiedenen Wellenlängen im Infrarotbereich und das Detektieren 120 von an der Fahrbahnoberfläche 1 a reflektiertem Licht. Wie oben beschrieben, kann das Licht der unterschiedlichen Wellenlängen zeitlich versetzt, beispielsweise mit unterschiedlicher Frequenz moduliert oder phasenverschoben mit gleicher Frequenz moduliert ausgesendet und dementsprechend detektiert werden. Das erlaubt es, nur einen Detektor für mehrere Wellenlängen und gegebenenfalls die Hintergrundstrahlung bei ausgeschalteten Lichtquellen zu verwenden.

Aus dem Verhältnis der Lichtintensitäten des reflektierten Lichts der unterschiedlichen Wellenlängen beziehungsweise des Verhältnisses aus diffus reflektiertem und spiegelnd reflektiertem Licht wird dann in Schritt 150 eine Information über die Beschaffenheit der Fahrbahnoberfläche 1 a ermittelt, das heißt ob die Fahrbahn 1 a trocken, nass, vereist, schneebedeckt ist oder eine andere Beschaffenheit hat. In diesem Schritt kann ebenfalls die Dicke d1 eines Wasserfilms 71 oder die Dicke einer Eisschicht 72 auf der Fahrbahnoberfläche 1a ermittelt werden.

Wurde die Beschaffenheit der Fahrbahnoberfläche 1a erkannt, so wird in Schritt 200 diese Information an das Fahrassistenzsystem übermittelt und gegebenenfalls unter Hinzunahme weiterer Parameter wie der Fahrzeuggeschwindigkeit, einer Querbeschleunigung, einer Getriebedrehzahl bestimmt, wie das Fahrassistenzsystem beeinflusst werden soll und welcher oder welche Parameter des Fahrassistenzsystems verändert werden soll. In Schritt 300 wird dann ein entsprechender Parameter des Fahrassistenzsystems verändert

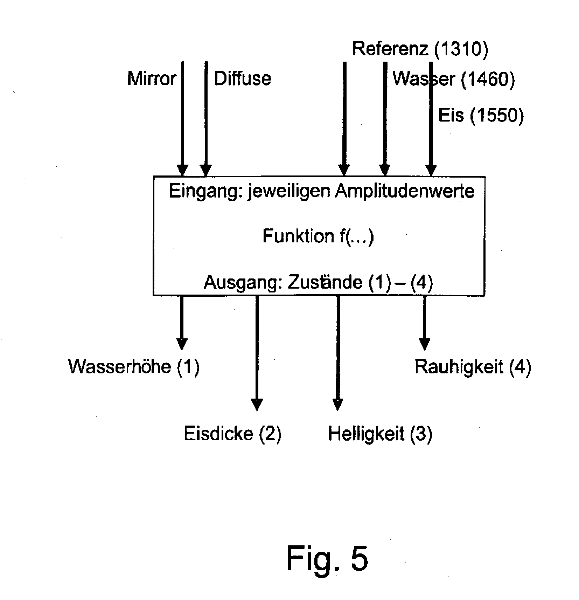

Die Ermittlung der Fahrbahnbeschaffenheit ist prinzipiell in Figur 5 dargestellt. Aus den ermittelten Lichtintensitäten für diffus reflektiertes, spiegelnd reflektiertes Licht sowie des diffus reflektierten Lichtes der oben erwähnten unterschiedlichen Wellenlängen im Infrarotbereich, werden die Fahrbahnbeschaffenheiten Wasserhöhe d1 auf der Fahrbahnoberfläche 1a, Eisdicke d2 auf der Fahrbahnoberfläche 1 a, ein Wert für die Helligkeit d3 und/oder für die Rauhigkeit d4 der Fahrbahnoberfläche 1 a bestimmt.

Wurde keine Eisdicke d2 und keine Wasserhöhe d1 ermittelt, jedoch eine erhöhte Rauhigkeit festgestellt, kann daraus geschlossen werden, dass sich das Fahrzeug 60 nicht auf einer befestigen Fahrbahn 1 befindet und ein Offroad Modus 88 zugeschaltet werden. Die Aktivierung des Offroad Modus 88 kann das Zuschalten eines Allradantriebs, das Zuschalten von mechanischen und/oder elektronischen Differentialsperren, das Einstellen des Fahrniveaus einer Niveauregulierung und/oder das Anpassen einer Regelschwelle des ABS umfassen.

Wurde eine bestimmte Dicke d1 eines Wasserfilms 71, eine bestimmte Dicke d2 einer Eisschicht 72 und/oder eine trockene Fahrbahnoberfläche 1a ermittelt, kann diese Information beispielsweise an die Steuerung des ABS 82 bereit gestellt werden. Der Regelzyklus kann dann für jedes Rad individuell angepasst werden. Je nach Fahrbahnbeschaffenheit kann dann ein Reibwert für die Fahrsituation abgeschätzt werden und der erste Regelzyklus des ABS so eingestellt werden, dass eine Überbremsung und damit ein Längeres blockieren eines Rades verhindert werden kann. Dadurch erfolgt die Einregelung des ABS während einem Bremsvorgang schneller.

Gegebenenfalls können weitere Größen in die Bestimmung der Bremskraft einbezogen werden, wie die Höhe des Schwerpunktes bei beladenem/unbeladenem Fahrzeug.

Die Ermittlung der Bremskraft an dem jeweiligen Rad kann beispielsweise mit der Formel

$$F_{soll} = \mu_{max}\, p\, (G + AG)\, c$$

erfolgen, wobei die $F_{soll}$ die Bremskraft, $\mu_{max}$ der mittels des Sensors 2 bestimmte Reibwert, p der Bremsdruck, G die statische Achslast, AG eine dynamische Achslast und c ein Faktor ist. Ziel ist es dabei ein Gleichgewicht aus Bremskraft an dem jeweiligen Rad und Bremsdruck zu erreichen.

Analog zur Steuerung eines ABS 82 kann auch ein ASR angesteuert werden und das Antreiben bzw. Abbremsen eines Rades jeweils Abhängigkeit von einem aktuell ermittelten Reibwert erfolgen.

Zur Steuerung einer Stabilitätskontrolle 84, wie einem ESC oder ESP, kann der mittels des Sensors 2 an jedem Rad ermittelte aktuelle Reibwert mit einem erforderlichen Reibwert verglichen werden. Der erforderliche Reibwert kann beispielsweise aus Fahrgeschwindigkeit und Lenkradeinschlag für eine Kurvenfahrt und ggf. weitern Größen bestimmt werden.

Die Reibkräfte zur Bestimmung des erforderliche Reibwerts ergeben sich auch zum einen aus der vektoriellen Addition der Längskräfte (Antreiben & Bremsen) und der Seitenkräfte. Die Längskräfte können aus dem Motormoment und den Bremsdrücken mit guter Näherung berechnet werden. Die Seitenkräfte ergeben sich in einer ersten Näherung aus dem Einspurmodell der ESC-Regelung. Bei allen Fahrmanövern, bei denen das Fahrzeug nicht geradeaus fährt, bewegt es sich auf einer Kreisbahn. Diese Kreisbahn wird beschrieben durch die quasistationären Querbeschleunigungskräfte, welche direkt im ESC-Modul gemessen werden und durch dynamische Anteile, die anhand der ebenfalls gemessenen Gierbeschleunigung bestimmt werden können. Mit der Kenntnis der Fahrzeuggeometrie lassen sich nun für die Räder vorn 62,63 und hinten 64,65 die notwendigen Seitenführungskräfte berechnen. Zusätzlich kann man mit dem Übergang vom Einspurmodell auf das reale Zweispurmodell diese Kräfte unter Randannahmen auf links und rechts verteilen.

Man erhält so eine Abschätzung der an jedem Rad momentan anliegenden Reibkräfte. Nähert man sich z.B. bei einer beschleunigten Kreisfahrt der durch einen Sensor 2 ermittelten Kraftschlussgrenze, so können stabilisierende Maßnahmen schon ergriffen werden, bevor eine Instabilität auftritt. Anders gesagt, nähert sich der erforderliche Reibwert dem ermittelten aktuellen Reibwert oder wird er geringer, so kann ein vorzeitiger Eingriff der Stabilitätskontrolle 84 erfolgen.

Die Information über die Fahrbahnbeschaffenheit kann auch zur Ermittlung eines maximal möglichen Schleppmoments verwendet werden.

Die durch ein Herunterschalten am Reifen entstehenden Kräfte lassen sich auf folgende Weise berechnen bzw. abschätzen: Die Getriebeübersetzung des Getriebes 87 ist bekannt oder kann errechnet werden aus dem für jedem Gang bestimmbaren Verhältnis aus Motordrehzahl und Fahrgeschwindigkeit 6. Für jeden Motor kann ein quasistatischer Anteil an Reibmoment angegeben werden (drehzahlabhängig) und eine dynamische Komponente, die sich aus dem Trägheitsmoment des Motors und der erforderlichen Beschleunigung (=Drehzahländerung) ergibt.

Somit kann für das Herunterschalten in einen bestimmten Gang die Kraft am Reifen berechnet werden, die erforderlich ist, um das Reibmoment zu überwinden und den Motor auf die Zieldrehzahl zu beschleunigen. Dividiert man nun diese Antriebskraft durch die vorhandene Radlast (aus der Differenzschlupfregelung ableitbar), so erhält man den notwendigen erforderlichen Reibwert. Vergleicht man nun diesen erforderlichen Reibwert mit dem aktuell an den angetriebenen Rädern mittels des Sensors 2 ermittelten Reibwerten, so kann schon bei Schaltabsicht bestimmt werden, ob es zu einem Durchrutschen der Räder und somit zu einem stabilitätskritischen Zustand kommen wird. Schon im Vorfeld kann das Herunterschalten verhindert werden oder Motor auf die Zieldrehzahl beschleunigt werden. Dazu können an sich bekannte DTC oder SMR Systeme verwendet werden.

Die vorangehende Beschreibung wurde im Hinblick auf die in den Figuren dargestellten Beispiele gegeben. Jedoch wird der Fachmann die angegebenen Beispiele ohne weiteres modifizieren oder kombinieren und beispielsweise um Warnsignale oder weitere Steuerungssignale und weitere Fahrassistenzsysteme ergänzen. Auch wird der Fachmann weitere Anwendungsmöglichkeiten der erfindungsgemäßen Vorrichtung und des erfindungsgemäßen Verfahrens finden, beispielsweise die Anbringung an anderen Stellen eines Fahrzeugs.

Der Fachmann wird ebenfalls andere als die angegebenen Wellenlängen in Erwägung ziehen um die Messergebnisse an unterschiedliche Anforderungen anzupassen. Es versteht sich, dass die angegebenen Wellenlängen nicht auf genau die Werte eingeschränkt sind, sondern einen Wellenlängenbereich umfassen können, welcher die angegebenen diskreten Wellenlängen enthält.

Es ist weiterhin möglich nicht nur eine, sonder mehrere oder alle der Fahrerassistenzsysteme 82, 84, 86, 88 eines Fahrzeuges mit der Information über die Beschaffenheit der Fahrbahnoberfläche 1a zu versorgen, um zumindest einen Parameter des jeweiligen Fahrerassistenzsystems 82, 84, 86, 88 in Abhängigkeit der Beschaffenheit der Fahrbahnoberfläche 1a zu verändern.

## Patentansprüche

1. Verfahren zur Steuerung zumindest eines Fahrassistenzsystems (82, 84, 86, 88) eines Fahrzeugs (60), wobei das Verfahren umfasst:

    - Aussenden von Licht (11) zumindest einer Wellenlänge auf eine Fahrbahnoberfläche (1 a) unter dem Fahrzeug (60);
    - Detektieren von an der Fahrbahnoberfläche (1 a) reflektiertem Licht (21, 31) der zumindest einen Wellenlänge;
    - Ermitteln zumindest einer Information (100) über die Beschaffenheit der Fahrbahnoberfläche (1a) anhand des detektieren reflektierten Lichts (21, 31) der zumindest einen Wellenlänge;
    - Übermitteln (200) der zumindest einen Information über die Beschaffenheit der Fahrbahnoberfläche (1a) an das zumindest eine Fahrassistenzsystem (82, 84, 86, 88); und
    - Verändern (300) zumindest eines Parameters des zumindest einen Fahrassistenzsystems (82, 84, 86, 88), so dass das zumindest eine Fahrassistenzsystem (82, 84, 86, 88) in Abhängigkeit von der Beschaffenheit der Fahrbahnoberfläche (1a) agiert, **dadurch gekennzeichnet, dass** die zumindest eine Information über die Beschaffenheit der Fahrbahnoberfläche (1a) umfasst, ob die Fahrbahnoberfläche (1a) eine Betonfläche, eine Asphaltfläche ist oder eine andere Rauhigkeit aufweist.

2. Verfahren nach Anspruch 1, wobei die zumindest eine Information über die Beschaffenheit der Fahrbahnoberfläche (1a) umfasst, ob die Fahrbahnoberfläche (1 a) nass, vereist, schneebedeckt und/oder trocken ist.

3. Verfahren nach einem der vorangehenden Ansprüche, wobei das zumindest eine Fahrassistenzsystem ein Antiblockiersystem (82) umfasst.

4. Verfahren nach Anspruch 3, wobei das Verändern (300) des zumindest einen Parameters des Fahrassistenzsystems (82) umfasst, einen ersten Regelzyklus des Antiblockiersystems (82) in Abhängigkeit von der Beschaffenheit der Fahrbahnoberfläche (1a) einzustellen.

5. Verfahren nach einem der vorangehenden Ansprüche, wobei das zumindest eine Fahrassistenzsystem eine Stabilitätsregelung (84) umfasst.

6. Verfahren nach Anspruch 5, wobei das Verändern (300) des zumindest einen Parameters des Fahrassistenzsystems (84) umfasst, einen Zeitpunkt für ein Eingreifen der Stabilitätsregelung (84) zu verändern.

7. Verfahren nach einem der vorangehenden Ansprüche, wobei das zumindest eine Fahrassistenzsystem eine Getriebesteuerung (86) eines automatischen Getriebes umfasst.

8. Verfahren nach Anspruch 7, wobei das Verändern (300) des zumindest einen Parameters des Fahrassistenzsystems (86) umfasst, einen Schaltzeitpunkt und/oder einen einzulegenden Gang des automatischen Getriebes (87) in Abhängigkeit von der Beschaffenheit der Fahrbahnoberfläche (1a) einzustellen.

9. Verfahren nach einem der vorangehenden Ansprüche, wobei das zumindest eine Fahrassistenzsystem einen Offroad Modus (88) umfasst.

10. Verfahren nach Anspruch 9, wobei das Verändern (300) des zumindest einen Parameters des Fahrassistenzsystems (88) umfasst, in Abhängigkeit von der Beschaffenheit der Fahrbahnoberfläche (1a) einen Offroad Modus einzustellen.

11. Verfahren nach einem der vorangehenden Ansprüche, wobei das Aussenden von Licht und das Detektieren von an der Fahrbahnoberfläche (1a) reflektiertem Licht Licht von drei unterschiedlichen Wellenlängen im Infrarotbereich umfasst.

12. Verfahren nach einem der vorangehenden Ansprüche, wobei das Detektieren von an der Fahrbahnoberfläche (1a) reflektiertem Licht, das Detektieren von diffus reflektiertem und spiegelnd reflektiertem Licht umfasst.

13. Vorrichtung (9) zur Steuerung zumindest eines Fahrassistenzsystems (82, 84, 86, 88) eines Fahrzeugs (60), wobei die Vorrichtung (9) umfasst:

einen optischen Oberflächensensor (2) zur Ermittlung zumindest einer Information über die Beschaffenheit einer Fahrbahnoberfläche (1a), und

eine Steuerung (7), welche mit dem optischen Oberflächensensor (2) und dem zumindest einen Fahrassistenzsystem (82, 84, 86, 88) verbunden ist und anhand der zumindest einer Information über die Fahrbahnoberfläche (1a) zumindest einen Parameter des zumindest einen Fahrassistenzsystems (82, 84, 86, 88) verändert, so dass das zumindest eine Fahrassistenzsystem (82, 84, 86, 88) in Abhängigkeit von der Beschaffenheit der Fahrbahnoberfläche (1a) agiert, **dadurch gekennzeichnet, dass** die zumindest eine Information über die Beschaffenheit der Fahrbahnoberfläche (1a) umfasst, ob die Fahrbahnoberfläche (1a) eine Betonfläche, eine Asphaltfläche ist oder eine andere Rauhigkeit aufweist.

14. Vorrichtung (9) nach Anspruch 13, wobei die zumindest eine Information über die Beschaffenheit umfasst, ob die Fahrbahnoberfläche (1a) nass, vereist, schneebedeckt und/oder trocken ist.

15. Vorrichtung (9) nach einem der Ansprüche 13 bis 14, wobei das zumindest eine Fahrassistenzsystem ein Antiblockiersystem (82) umfasst.

16. Vorrichtung (9) nach einem der Ansprüche 13 bis 15, wobei das zumindest eine Fahrassistenzsystem eine Stabilitätsregelung (84) umfasst.

17. Vorrichtung (9) nach einem der Ansprüche 13 bis 16, wobei das zumindest eine Fahrassistenzsystem eine Getriebesteuerung (86) eines automatischen Getriebes umfasst.

18. Vorrichtung (9) nach einem der Ansprüche 13 bis 17, wobei das zumindest eine Fahrassistenzsystem einen Offroad Modus (88) umfasst.

19. Vorrichtung (9) nach einem der Ansprüche 13 bis 18, wobei der optische Oberflächensensor (2) umfasst:

eine Lichtquelleneinheit (12) zum Aussenden von Licht von zumindest einer Wellenlänge auf den Untergrund (1) und zumindest einen ersten Detektor (20, 30), um von der Fahrbahnoberfläche (1 a) reflektiertes Licht zu detektieren

20. Vorrichtung (9) nach Anspruch 19, wobei die Lichtquelleneinheit (12) und der zumindest eine Detektor (20, 30) in einem Gehäuse (4) angeordnet sind.

21. Vorrichtung nach Anspruch 19 oder 20, zudem umfassen zumindest eine zweiten Detektor (30) zum Erfassen von spiegelnd reflektiertem Licht.

22. Vorrichtung (9) nach einem der Ansprüche 19 bis 21, wobei die Lichtquelleneinheit (12) drei Lichtquellen zur Aussendung von Licht dreier unterschiedlicher Wellenlängen umfasst.

23. Fahrzeug (60) mit einer Vorrichtung (9) nach einem der Ansprüche 13 bis 22.

**Claims**

1. Method for controlling at least one driver assistance system (82, 84, 86, 88) of a vehicle (60), wherein the method comprises:

   - Emitting light (11) of at least one wavelength onto a roadway surface (1a) under the vehicle (60);
   - Detecting light (21, 31) of the at least one wavelength reflected at the roadway surface (1a);
   - Acquiring at least one information item (100) relating to the condition of the roadway surface (1a) on the basis of the detected reflected light (21, 31) of the at least one wavelength;
   - Transmitting (200) the at least one information item relating to the condition of the roadway surface (1a) to the at least one driver assistance system (82, 84, 86, 88); and
   - Changing (300) at least one parameter of the at least one driver assistance system (82, 84, 86, 88), with the result that the at least one driver assistance system (82, 84, 86, 88) acts as a function of the condition of the roadway surface (1a), **characterized in that** the at least one information item relating to the condition of the roadway surface (1a) comprises information as to whether the roadway surface (1a) has a concrete surface, an asphalt surface or some other roughness.

2. Method according to Claim 1, wherein the at least one information item relating to the condition of the roadway surface (1a) comprises information as to whether the roadway surface (1a) is wet, icy, snow covered and/or dry.

3. Method according to one of the preceding claims, wherein the at least one driver assistance system comprises an anti-lock brake system (82).

4. Method according to Claim 3, wherein the modifying (300) of the at least one parameter of the driver assistance system (82) comprises setting a first control cycle of the anti-lock brake system (82) as a function of the condition of the roadway surface (1a).

5. Method according to one of the preceding claims, wherein the at least one driver assistance system comprises a stability adjuster (84).

6. Method according to Claim 5, wherein the modifying (300) of the at least one parameter of the driver assistance system (84) comprises changing a time for intervention by the stability adjuster (84).

7. Method according to one of the preceding claims, wherein the at least one driver assistance system comprises a transmission controller (86) of an automatic transmission.

8. Method according to Claim 7, wherein the modifying (300) of the at least one parameter of the driver assistance system (86) comprises setting a shift time and/or a gear speed, to be engaged of the automatic transmission (87) as a function of the condition of the roadway surface (1a).

9. Method according to one of the preceding claims, wherein the at least one driver assistance system comprises an offroad mode (88).

10. Method according to Claim 9, wherein the modifying (300) of the at least one parameter of the driver assistance system (88) comprises setting an offroad mode as a function of the condition of the roadway surface (1a).

11. Method according to one of the preceding claims, wherein the emitting of light and the detecting of light reflected at the roadway surface (1a) comprises light of three different wavelengths in the infrared range.

12. Method according to one of the preceding claims, wherein the detecting of light reflected at the roadway surface (1a) comprises the detecting of diffusely reflected light and light which is reflected in a mirroring fashion.

13. Device (9) for controlling at least one driver assistance system (82, 84, 86, 88) of a vehicle (60), wherein the device (9) comprises:

   an optical surface sensor (2) for acquiring at least one information item relating to the condition of a roadway surface (1a), and
   a controller (7), which is connected to the optical surface sensor (2) and to the at least one driver assistance system (82, 84, 86, 88), and changes at least one parameter of the at least one driver assistance system (82, 84, 86, 88) on the basis of the at least one information item relating to the roadway surface (1a), with the result that the at least one driver assistance system (82, 84, 86, 88) acts as a function of the condition of the roadway surface (1a), **characterized in that** the at least one information item relating to the condition of the roadway surface (1a) comprises information as to whether the roadway surface (1a) has a concrete surface, an asphalt surface or some other roughness.

14. Device (9) according to Claim 13, wherein the at least one information item relating to the condition comprises information as to whether the roadway surface (1a) is wet, icy, snow covered and/or dry.

15. Device (9) according to one of Claims 13 to 14, wherein the at least one driver assistance system comprises an anti-lock brake system (82).

16. Device (9) according to one of Claims 13 to 15, wherein the at least one driver assistance system comprises a stability adjuster (84).

17. Device (9) according to one of Claims 13 to 16, wherein the at least one driver assistance system comprises a transmission controller (86) of an automatic transmission.

18. Device (9) according to one of Claims 13 to 17, wherein the at least one driver assistance system comprises an offroad mode (88).

19. Device (9) according to one of Claims 13 to 18, wherein the optical surface sensor (2) comprises:

   - a light source unit (12) for emitting light of at least one wavelength onto the underlying surface (1), and
   - at least a first detector (20, 30) for detecting light reflected by the roadway surface (1a).

20. Device (9) according to Claim 19, wherein the light source unit (12) and the at least one detector (20, 30) are arranged in a housing (4).

21. Device according to Claim 19 or 20, also comprising at least a second detector (30) for detecting light reflected in a mirroring fashion.

22. Device (9) according to one of Claims 19 to 21, wherein the light source unit (12) comprises three light sources for emitting light of three different wavelengths.

23. Vehicle (60) having a device (9) according to one of Claims 13 to 22.

**Revendications**

1. Procédé pour assurer la commande d'au moins un système d'aide à la conduite (82, 84, 86, 88) d'un véhicule (60), le procédé comprenant :

   - l'émission de lumière (11) d'au moins une longueur d'onde sur une surface d'une voie de roulement (1a) située en dessous du véhicule (60) ;
   - la détection de lumière (21, 31) de l'au moins une longueur d'onde réfléchie sur la surface d'une voie de roulement (1a) ;
   - le calcul d'au moins une information (100) relative à la structure de la surface d'une voie de roulement (1a) à l'aide de la détection de la lumière réfléchie (21, 31) de l'au moins une longueur d'onde ;
   - la transmission (200) de l'au moins une information relative à la structure de la surface d'une voie de roulement (1a) à l'au moins un système d'aide à la conduite (82, 84, 86, 88) ; et
   - la modification (300) d'au moins un paramètre de l'au moins un système d'aide à la conduite (82, 84, 86, 88), de sorte que l'au moins un système d'aide à la conduite (82, 84, 86, 88) agit en fonction de la structure de la surface d'une voie de roulement (1a) ;

   **caractérisé en ce que** l'au moins une information relative à la structure de la surface d'une voie de roulement (1a) comprend le fait de définir si la surface d'une voie de roulement (1a) est une surface en béton, une surface en asphalte ou si elle présente une rugosité différente.

2. Procédé selon la revendication 1, l'au moins une information relative à la structure de la surface d'une voie de roulement (1a) comprenant le fait de définir si la surface d'une voie de roulement (1a) est mouillée, verglacée, enneigée et/ou sèche.

3. Procédé selon l'une quelconque des revendications précédentes, l'au moins un système d'aide à la conduite comprenant un système d'antiblocage (82).

4. Procédé selon la revendication 3, la modification (300) de l'au moins un paramètre du système d'aide à la conduite (82) comprenant le déclenchement d'un premier cycle de réglage du système d'antiblocage (82) en fonction de la structure de la surface d'une voie de roulement (1a).

5. Procédé selon l'une quelconque des revendications précédentes, l'au moins un système d'aide à la conduite comprenant un régulateur de stabilité (84).

6. Procédé selon la revendication 5, la modification (300) de l'au moins un paramètre du système d'aide à la conduite (84) comprenant la modification du moment d'engrènement du régulateur de stabilité (84).

7. Procédé selon l'une quelconque des revendications précédentes, l'au moins un système d'aide à la conduite comprenant une commande de boîte de vitesses (86) d'une boîte de vitesses automatique.

8. Procédé selon la revendication 7, la modification (300) de l'au moins un paramètre du système d'aide à la conduite (86) comprenant le déclenchement du moment de changement de vitesse et/ou le passage d'une vitesse de la boîte de vitesses automatique (87) à passer en fonction de la structure de la surface d'une voie de roulement (1a).

9. Procédé selon l'une quelconque des revendications précédentes, l'au moins un système d'aide à la conduite comprenant un mode tout-terrain (88).

10. Procédé selon la revendication 9, la modification (300) de l'au moins un paramètre du système d'aide à la conduite (88) comprenant le déclenchement, en fonction de la structure de la surface d'une voie de roulement (1a), d'un mode tout-terrain.

11. Procédé selon l'une quelconque des revendications précédentes, l'émission de lumière et la détection de la lumière réfléchie sur la surface d'une voie de roulement (1a) comprenant trois longueurs d'onde différentes situées dans la plage des infrarouges.

12. Procédé selon l'une quelconque des revendications précédentes, la détection de la lumière réfléchie sur la surface d'une voie de roulement (1a) comprenant la détection de la lumière réfléchie de façon diffuse et de la lumière réfléchie par miroitement.

13. Dispositif (9) pour assurer la commande d'au moins un système d'aide à la conduite (82, 84, 86, 88) d'un véhicule (60), le dispositif (9) comprenant :

un capteur optique de surface (2) pour calculer au moins une information relative à la structure d'une surface d'une voie de roulement (1a) ; et une commande (7) reliée au capteur optique de surface (2) et à l'au moins un système d'aide à la conduite (82, 84, 86, 88) et modifiant, à l'aide de l'au moins une information relative à la surface d'une voie de roulement (1a), au moins un paramètre de l'au moins un système d'aide à la conduite (82, 84, 86, 88), de sorte que l'au moins un système d'aide à la conduite (82, 84, 86, 88) agit en fonction de la structure de la surface d'une voie de roulement (1a) ;
**caractérisé en ce que** l'au moins une information relative à la structure de la surface d'une voie de roulement (1a) comprend le fait de définir si la surface d'une voie de roulement (1a) est une surface en béton, une surface en asphalte ou si elle présente une rugosité différente.

14. Dispositif (9) selon la revendication 13, l'au moins une information relative à la structure comprenant le fait de définir si la surface d'une voie de roulement (1a) est mouillée, verglacée, enneigée et/ou sèche.

15. Dispositif (9) selon l'une quelconque des revendications 13 à 14, l'au moins un système d'aide à la conduite comprenant un système d'antiblocage (82).

16. Dispositif (9) selon l'une quelconque des revendications 13 à 15, l'au moins un système d'aide à la conduite comprenant un régulateur de stabilité (84).

17. Dispositif (9) selon l'une quelconque des revendications 13 à 16, l'au moins un système d'aide à la conduite comprenant une commande de boîte de vitesses (86) d'une boîte de vitesses automatique.

18. Dispositif (9) selon l'une quelconque des revendications 13 à 17, l'au moins un système d'aide à la conduite comprenant un mode tout-terrain (88).

19. Dispositif (9) selon l'une quelconque des revendications 13 à 18, le capteur optique de surface (2) comprenant :

une unité de source lumineuse (12) permettant d'envoyer de la lumière d'au moins une longueur d'onde sur le sol (1) ; et
au moins un premier détecteur (20, 30) permettant de détecter la lumière réfléchie par la surface d'une voie de roulement (1a).

20. Dispositif (9) selon la revendication 19, l'unité de source lumineuse (12) et l'au moins un détecteur (20, 30) étant disposés dans un carter (4).

21. Dispositif selon la revendication 19 ou 20, comprenant en outre au moins un deuxième détecteur (30) permettant de détecter la lumière réfléchie par miroitement.

22. Dispositif (9) selon l'une quelconque des revendications 19 à 21, l'unité de source lumineuse (12) comprenant trois sources lumineuses permettant d'envoyer de la lumière de trois longueurs d'onde différentes.

23. Véhicule (60) doté d'un dispositif (9) selon l'une quelconque des revendications 13 à 22.

Fig. 1a

Draufsicht

Fig. 1b

EP 2 588 355 B1

9

4

2

50

20

14  10  12

30

22

32

24

26

16

28  21  18  38  31  4a

11

h

10a

20a

30a

d1

71  1a

1

## Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10314424 A1
- DE 102008038037 A1